# EUROPÄISCHE PATENTANMELDUNG

(11) **EP 1 902 610 A1**
(43) Veröffentlichungstag der Anmeldung: **26.03.2008**
(21) Anmeldenummer: 06019539.3
(22) Anmeldetag: 19.09.2006
(51) Int. Cl.: A01D 46/26

(54) **Saatguterntemaschine**

(71) Anmelder: Nester, Martin, 72160 Horb-Bildechingen (DE)
(72) Erfinder: Nester, Martin, 72160 Horb-Bildechingen (DE)
(74) Vertreter: Klocke, Peter

(57) **Zusammenfassung**

Die Erfindung schlägt vor, eine Saatgutemtemaschine (1) als selbstfahrende Personenhubvorrichtung (2) mit einer Arbeitsbühne (7) und einem um einen Baumstamm (11) aufspannbaren Schirm (8) als Saatgutauffangeinrichtung sowie mit einem am Baumstamm (11) anbringbaren Rüttler (9) auszubilden. Die Erfindung ermöglicht ein einfaches Arbeiten und Abernten in einigen Metern Höhe und auch bei am Boden schlecht zugänglichen Bäumen (Figur 2).

## Beschreibung

Die Erfindung betrifft eine Saatgutemtemaschine mit den Merkmalen des Oberbegriffs des Anspruchs 1.

Bislang wird Saatgut von Bäumen von Hand gepflückt. Zur Arbeitserleichterung ist es statt dessen auch möglich, Netze um einen Baumstamm eines Baums herum auf dem Boden auszulegen, den Baum zu schütteln und das herabgefallene Saatgut aufzusammeln. Der Baum kann mit einem Rüttler gerüttelt werden. Auch das Auffangen des herabgefallenen Saatguts mit Netzen ist mühsam. Außerdem ist das Auslegen von Netzen nicht möglich, wenn Jungbewuchs von etwa Brusthöhe den Baumstamm umgibt.

Aufgabe der Erfindung ist eine Saatgutemtemaschine vorzuschlagen, die das Ernten von Saatgut von Bäumen erleichtert.

Diese Aufgabe wird durch die Merkmale des Anspruchs 1 gelöst. Die erfindungsgemäße Saatgutemtemaschine weist eine vertikal und horizontal bewegbare Hubvorrichtung auf. Mit bewegbar ist nicht eine Verfahrbarkeit oder sonstige Bewegbarkeit der Hubvorrichtung selbst gemeint, sondern die Bewegbarkeit einer mit der Hubvorrichtung anhebbaren Last bei feststehender Hubvorrichtung. Die Last ist also nicht nur vertikal bewegbar, d. h. nicht nur anhebbar, sondern auch horizontal bewegbar.

Des Weiteren weist die erfindungsgemäße Saatgutemtemaschine eine Auffangeinrichtung für von einem Baum herabfallendes Saatgut auf, die an der Hubvorrichtung angebracht und mit der Hubvorrichtung vertikal und horizontal bewegbar ist. Die Auffangeinrichtung ist um einen Baumstamm herum aufspannbar, den sie in um den Baumstamm aufgespanntem Zustand nach Art eines seitlich abstehenden Kragens umschließt. Mit der Hubvorrichtung kann die Auffangeinrichtung in einer gewünschten Höhe an den Baumstamm eines abzuerntenden Baums bewegt und um den Baumstamm aufgespannt werden. Vom Baum fallendes Saatgut fällt in die Auffangeinrichtung.

Des Weiteren weist die erfindungsgemäße Saatgutemtemaschine einen Rüttler zum Rütteln des Baums auf.

Ein Vorteil der Erfindung ist ein baumverträgliches und rindenschonendes Rütteln des Baums in einer Höhe von einigen Metern, beispielsweise in 10 bis 15 m über dem Boden. Ein weiterer Vorteil der Erfindung ist die Möglichkeit des Auffangens vom Baum herabfallenden Saatguts mit der Auffangeinrichtung direkt unterhalb einer Baumkrone, wodurch wenig Saatgut durch Wind verloren geht. Weiterer Vorteil der Erfindung ist eine problemlose Saatgutemte von am Boden schlecht zugänglichen Bäumen. Das Ernten von Saatgut eines Baums ist mit der erfindungsgemäßen Saatguterntemaschine in kurzer Zeit und mühelos möglich. Oftmals ist das Ernten von Saatgut von mehreren, beispielsweise zwei oder drei Bäumen, in einer Aufstellung der Hubvorrichtung ohne Umsetzen der Hubvorrichtung möglich.

Vorzugsweise ist die Hubvorrichtung der erfindungsgemäßen Saatgutemtemaschine eine Personenhubvorrichtung mit einer Arbeitsbühne. Dadurch ist das Befestigen des Rüttlers an einem Baumstamm in einer Höhe bis zu einer maximalen Hubhöhe der Hubvorrichtung möglich. Außerdem ist das Aufspannen der Auffangeinrichtung um den Baumstamm vereinfacht, wenn eine Bedienperson an der Auffangeinrichtung und nicht am Boden steht. Eine Zugänglichkeit der Auffangeinrichtung ist gewährleistet.

Bei aufgespannter Auffangeinrichtung befindet sich die Arbeitsbühne in bevorzugter Ausgestaltung der Erfindung an einem Rand der Auffangeinrichtung, und zwar außerhalb der Auffangeinrichtung. Auf diese Weise ist die aufgespannte Auffangeinrichtung gut zugänglich und eine Baumkrone oberhalb der Auffangeinrichtung sichtbar. Ebenfalls einer guten Zugänglichkeit dient die Anordnung der Arbeitsbühne in etwa Hüfthöhe unterhalb der Auffangeinrichtung. Die Auffangeinrichtung befindet sich also ungefähr in Hüfthöhe einer auf der Arbeitsbühne stehenden Bedienperson.

Für die um den Baumstamm aufspannbare Auffangeinrichtung sind verschiedene Konstruktionen mit beispielsweise Netzen, Tüchern, Folien oder dgl. oder auch mit auffächerbaren festen, plattenförmigen Teilen denkbar. Eine Ausgestaltung der Erfindung sieht einen um einen Baumstamm aufspannbaren Schirm als Auffangeinrichtung vor. Diese Ausgestaltung der Erfindung ermöglicht eine einfache und einfach um den Baumstamm aufspannbare Auffangeinrichtung für vom Baum herabfallendes Saatgut, die bei Nichtgebrauch und zum Transport einfach und platzsparend zusammenlegbar ist.

Eine Weiterbildung der Erfindung sieht eine Öffnung in der Auffangeinrichtung vor, unter der beispielsweise ein Sack oder ein Eimer als Auffangbehälter angeordnet ist. Die Öffnung befindet sich vorzugsweise an einer tiefen Stelle der Auffangeinrichtung. In die aufgespannte Auffangeinrichtung gefallenes Saatgut kann beispielsweise in die Öffnung gekehrt werden und fällt in den Auffangbehälter.

Eine Ausgestaltung der Erfindung sieht einen Rüttler für die Auffangeinrichtung vor. Durch Rütteln der Auffangeinrichtung bewegt sich das in die Auffangeinrichtung gefallene Saatgut schwerkraftbedingt zur tiefsten Stelle der Auffangeinrichtung, an der sich vorzugsweise die Öffnung mit dem darunter angeordneten Auffangbehälter befindet. Das Sammeln des Saatguts im Auffangbehälter ist dadurch weiter vereinfacht.

Vorzugsweise weist die erfindungsgemäße Saatguterntemaschine eine Fernbedienung auf, die beispielsweise kabelgebunden oder eine Funkfernbedienung sein kann. Die Fernbedienung ermöglicht eine Bedienung der Hubvorrichtung, der Auffangeinrichtung und/oder des Rüttlers von der Arbeitsbühne aus.

Die Saatguterntemaschine bzw. deren Hubvorrichtung kann als Fahrzeuganhänger ausgeführt sein, bei einer Ausgestaltung der Erfindung ist sie selbstfahrend.

Eine Ausgestaltung der Erfindung sieht ein Gestell für die Arbeitsbühne vor, um die Arbeitsbühne bei Nichtgebrauch abstellen und von der Hubvorrichtung lösen zu können. Die Hubvorrichtung kann dadurch anderweitig benutzt werden. Eine Weiterbildung sieht vor, dass das Gestell entfernbare Füße aufweist. Die Füße sind beispielsweise abnehmbar oder nach oben schwenkbar. Dadurch wird die Arbeitsbühne so flach, dass sie bodennah an einen Baumstamm bewegt werden kann.

Die Erfindung wird nachfolgend anhand eines in der Zeichnung dargestellten Ausführungsbeispiels näher erläutert. Es zeigen:
- Figur 1: eine erfindungsgemäße Saatgutemtemaschine; und
- Figur 2: einen aufgespannten Schirm der Saatgutemtemaschine aus Figur 1.

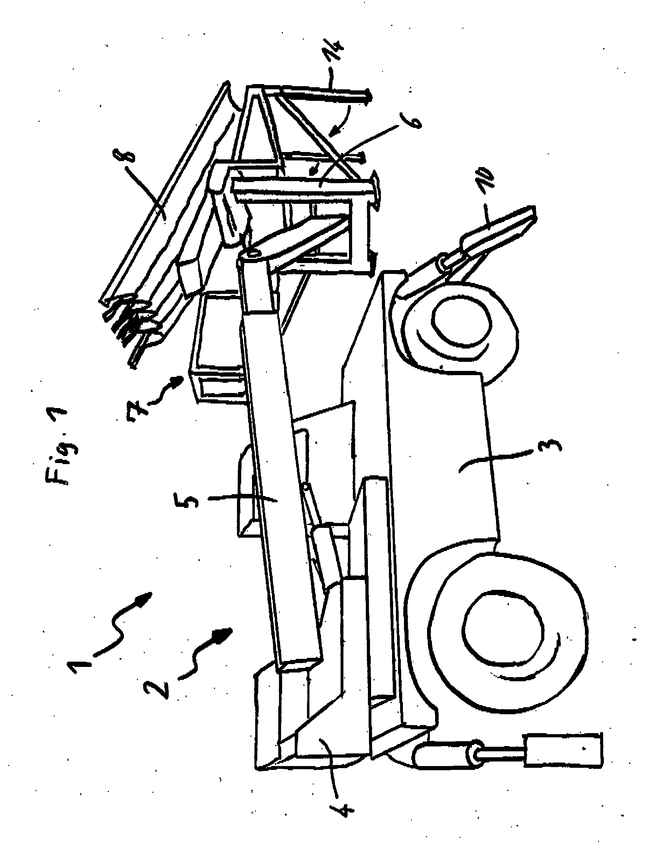

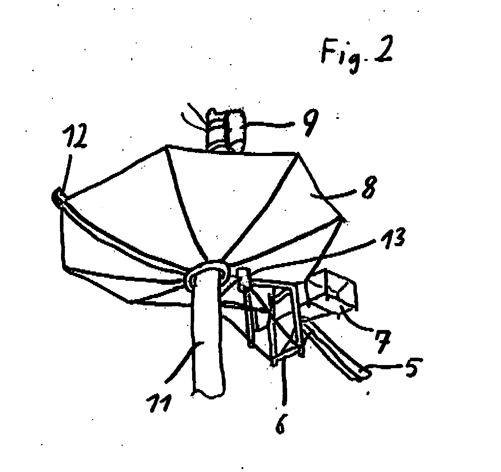

Die in Figur 1 dargestellte, erfindungsgemäße Saatgutemtemaschine 1 weist eine selbstfahrende Hubvorrichtung 2 auf. Auf einem Fahrgestell 3 der Hubvorrichtung 2 ist ein drehbares Oberteil 4 mit einem hydraulisch um eine gedachte horizontale Achse schwenkbaren und teleskopierbaren Hubarm 5 angebracht. Am Tragarm 5 ist ein Gestell 6 mit einer begehbaren Arbeitsplattform 7 angebracht. Die Arbeitsplattform 7 befindet sich seitlich neben dem Hubarm 5. Die Hubvorrichtung 7 ist somit eine Personenhubvorrichtung. Auf dem Gestell 6 ist ein Schirm 8 angebracht, der eine Auffangeinrichtung für von einem Baum herabfallendes Saatgut bildet. In Figur 1 ist der Schirm 8 zusammengelegt. Das Aufspannen und das Zusammenlegen des Schirms 8 kann beispielsweise hydraulisch, pneumatisch oder elektromechanisch erfolgen. Eine Energieversorgung erfolgt mittels in der Zeichnung nicht sichtbarer Leitungen von der Hubvorrichtung 2 aus. Außerdem weist die Saatguterntemaschine 1 einen nur in Figur 2 sichtbaren Rüttler 9 sowie eine nicht dargestellte Funkfernbedienung auf. Mit an sich bekannten hydraulischen Stützen 10 kann die Hubvorrichtung 1 stabil abgestützt werden, Durch die Drehbarkeit des Oberteils 4 um eine gedachte vertikale Achse, die Schwenkbarkeit des Hubarms 5 um eine gedachte horizontale Achse und die Teleskopierbarkeit des Hubarms 5 kann das Gestell 6 mit der Arbeitsbühne 7 und dem Schirm 8 vertikal und horizontal bewegt werden.

Zum Ernten von Saatgut wird die Saatgutemtemaschine 1 so nahe an einen abzuerntenden Baum gefahren, dass ein Baumstamm 11 unterhalb einer Baumkrone mit dem Hubarm 5 erreichbar ist. Die Hubvorrichtung 1 wird mit ihren hydraulischen Stützen 10 stabil stehend abgestützt. Mit der Hubvorrichtung 2 wird durch Anheben, Schwenken und Teleskopieren des Hubarms 5 die Arbeitsbühne 7 so angehoben und bewegt, dass sie sich in einer Höhe von einigen Metern, beispielsweise 10 bis 15 m über dem Boden, am Baumstamm 11 befindet. Von der Arbeitsbühne 7 aus wird bequem der Rüttler 9 mit Spannbändern am Baumstamm 11 befestigt. Der Rüttler 9 ist über in der Zeichnung nicht sichtbare Leitungen mit der Hubvorrichtung 2 verbunden, er wird von der Hubvorrichtung 2 mit Energie versorgt. Das Gestell 6 und der Schirm 8 befinden sich seitlich neben dem Baumstamm.

Nach dem Befestigen des Rüttlers 9 wird das Gestell 6 mit der Arbeitsbühne 7 und dem Schirm 8 vorzugsweise abgesenkt und so bewegt, dass das Gestell 6 sich mit einer dem Hubarm 5 abgewandten Seite nahe am Baumstamm 11 befindet (Figur 2). Eine Mitte des Schirms 8 befindet sich dadurch am Baumstamm 11, die Arbeitsbühne 7 hat einen dem Radius des Schirms entsprechenden Abstand vom Baumstamm 11.

Der Schirm 8 wird vergleichbar einem Fächer aufgespannt, so dass er den Baumstamm 11 umschließt. Beim Aufspannen schwenken Speichen des Schirms 8 in Umfangsrichtung um den Baumstamm 11. Der um den Baumstamm 11 aufgespannte Schirm 8 ist einem den Baumstamm 11 umschließenden, seitlich abstehenden Kragen vergleichbar. Der Baumstamm 11 tritt durch ein Mittelloch des Schirms 8 hindurch, das sich beim Aufspannen des Schirms 8 bildet. Der Schirm 8 liegt nicht am Baumstamm 11 an, ein Lochrand des Mittellochs des Schirms 8 ist ausgepolstert, um eine Beschädigung der Baumrinde zu vermeiden. Ein Elektromagnet 12 hält den Schirm 8 geschlossen. Auch eine Stromversorgung des Elektromagneten 12 erfolgt über nicht dargestellte Stromkabel von der Hubvorrichtung 2 aus.

Bei aufgespanntem Schirm 8 befindet sich die Arbeitsbühne 7 außerhalb des Schirms 8 an dessen Rand. Die Arbeitsbühne 7 befindet sich um Hüfthöhe unterhalb des Schirms 8, ein Handlauf eines Geländers der Arbeitsbühne 7 befindet sich etwa in Höhe des Schirms 8.

Der Rüttler 9 wird eingeschaltet und rüttelt den Baum, vom Baum herabfallendes Saatgut fällt in den aufgespannten, den Baumstamm 11 umschließenden Schirm 8. Durch das Aufspannen wölbt sich der Schirm 8 mit einer konkaven Seite nach oben. Mit einem Besen wird das Saatgut von der Arbeitsbühne 7 aus in eine in der Zeichnung nicht sichtbare Öffnung des Schirms 8 gekehrt, unter der ein Sack 13 als Auffangbehälter angeordnet ist. Aus dem Sack 13 lässt sich das gesammelte Saatgut später problemlos entnehmen. Die Öffnung mit dem Sack 13 befindet sich nahe der Mittelöffnung des Schirms 8, also an einem tiefen Punkt des Schirms 8, so dass der Samen unterstützt von der Schwerkraft leicht in die Öffnung gekehrt werden kann. Die Bedienung sämtlicher Funktionen der Saatguterntemaschine 1 erfolgt mittels der nicht dargestellten Fernbedienung, die Saatgutemtemaschine 1 kann also von einer Person von der Arbeitsbühne 7 aus bedient werden. Mit der Fernbedienung wird der Hubarm 5 und mit diesem die Arbeitsbühne 7 und der Schirm 8 bewegt, der Schirm 8 aufgespannt und zusammengelegt und der Rüttler 9 ein- und ausgeschaltet. Sofern mehrere Bäume erreichbar sind, ohne die Hubvorrichtung 1 verfahren zu müssen, können diese in einer Aufstellung der Hubvorrichtung 2 ohne Umsetzen abgeerntet werden.

Bei Nichtgebrauch können die Arbeitsbühne 7 und der Schirm 8 mit dem Gestell 6 abgestellt und von der Hubvorrichtung 2 gelöst werden. Die Hubvorrichtung 2 ist dadurch anderweitig verwendbar.

Das Gestell 6 ist dreiecksförmig verstrebt und weist zwei nach oben schwenkbare Füße 14 an einer dem Hubarm 5 abgewandten Seite auf. Bei in Pfeilrichtung nach oben geschwenkten Füßen 14 ist das Gestell 6 an seiner dem Hubarm 5 abgewandten Seite niedrig. Das ermöglicht ein Schwenken des Gestells 6 schräg nach unten und ein Anfahren eines Baumstamms flach über dem Boden. Der Schirm 8 ist dadurch auch in niedriger Höhe um einen Baumstamm aufspannbar.

## Patentansprüche

1. Saatgutemtemaschine, mit einer Hubvorrichtung (2), mit einer Auffangeinrichtung (8) für von einem Baum herabfallendes Saatgut, die an der Hubvorrichtung (2) angebracht und mit der Hubvorrichtung vertikal und horizontal bewegbar ist, die um einen Baumstamm (11) aufspannbar ist und in um den Baumstamm (11) aufgespanntem Zustand den Baumstamm (11) nach Art eines seitlich abstehenden Kragens umschließt, und mit einem am Baumstamm (11) anbringbaren Rüttler (9).

2. Saatgutemtemaschine nach Anspruch 1, **dadurch gekennzeichnet, dass** die Hubvorrichtung (2) als Personenhubvorrichtung mit einer Arbeitsbühne (7) ausgebildet ist.

3. Saatgutemtemaschine nach Anspruch 2, **dadurch gekennzeichnet, dass** die Arbeitsbühne (7) außen an einem Rand der aufgespannten Auffangeinrichtung (8) angeordnet ist.

4. Saatguterntemaschine nach Anspruch 2 oder 3, **dadurch gekennzeichnet, dass** die Arbeitsbühne (7) in Hüfthöhe unterhalb der Auffangeinrichtung (8) angeordnet ist.

5. Saatguterntemaschine nach einem der vorhergehenden Ansprüche, **dadurch gekennzeichnet, dass** die Saatguterntemaschine (1) einen um einen Baumstamm (11) aufspannbaren Schirm als Auffangeinrichtung (8) aufweist.

6. Saatguterntemaschine nach einem der vorhergehenden Ansprüche, **dadurch gekennzeichnet, dass** die Auffangeinrichtung (8) eine Öffnung und einen unter der Öffnung angeordneten Auffangbehälter (13) für das Saatgut aufweist.

7. Saatguterntemaschine nach einem der vorhergehenden Ansprüche, **dadurch gekennzeichnet, dass** die Auffangeinrichtung (8) einen Rüttler (9) aufweist.

8. Saatgutemtemaschine nach einem der vorhergehenden Ansprüche, **dadurch gekennzeichnet, dass** die Saatguterntemaschine (1) eine Fernbedienung aufweist.

9. Saatguterntemaschine nach einem der vorhergehenden Ansprüche, **dadurch gekennzeichnet, dass** die Hubvorrichtung (2) selbstfahrend ist.

10. Saatgutemtemaschine nach einem der Ansprüche 2 bis 9, **dadurch gekennzeichnet, dass** die Arbeitsbühne (7) ein Gestell (6) zum Abstellen aufweist.

11. Saatgutemtemaschine nach Anspruch 10, **dadurch gekennzeichnet, dass** das Gestell (6) entfernbare Füße (14) aufweist.
